# EUROPÄISCHE PATENTSCHRIFT

(11) **EP 4 197 045 B1**
(45) Veröffentlichungstag und Bekanntmachung des Hinweises auf die Patenterteilung: **13.03.2024**
(21) Anmeldenummer: 22700709.3
(22) Anmeldetag: 05.01.2022
(51) Int. Cl.: H01M 8/0258, H01M 8/026, H01M 8/10

(54) **BIPOLARPLATTE MIT IM AKTIVEN BEREICH VORHANDENEN KANALAUFTEILUNGEN UND BRENNSTOFFZELLENSTAPEL**
BIPOLAR PLATE WITH BRANCHED CHANNELS WITHIN AN ACTIVE AREA AND FUEL CELL STACK
PLAQUE BIPOLAIRE COMPRENANT DES RAMIFICATIONS DE CANAUX ET EMPILEMENT DES PILES À COMBUSTIBLE

(30) Priorität: 08.01.2021 DE 102021100186
(43) Veröffentlichungstag der Anmeldung: 21.06.2023
(73) Patentinhaber: AUDI AG, 85057 Ingolstadt (DE)
(72) Erfinder: KEITSCH, Oliver, 74076 Heilbronn (DE); LIPPL, Fabian, 68163 Mannheim (DE); SIEBEL, Armin, 74172 Neckarsulm (DE); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2022/050114
(87) Internationale Veröffentlichungsnummer: WO 2022/148761

(56) Entgegenhaltungen:
- EP-A1- 2 026 393
- DE-A1-102008 033 211
- DE-A1-102016 111 638
- JP-A- 2004 079 245

## Beschreibung

### BESCHREIBUNG:

Die Erfindung betrifft eine Bipolarplatte für eine Brennstoffzelle, die an ihrer ersten Plattenseite mit einem ersten Reaktantenflussfeld gebildet ist und die an ihrer der ersten Plattenseite gegenüberliegenden zweiten Plattenseite mit einem zweiten Reaktantenflussfeld gebildet ist. Die Flussfelder umfassen in einem aktiven Bereich jeweils mehrere von Stegen begrenzte Strömungskanäle für einen der beiden an der Brennstoffzellenreaktion teilnehmenden Reaktanten, wobei jeweils der aktive Bereich einlassseitig über einen außerhalb des aktiven Bereichs verlaufenden Verteilbereich strömungsmechanisch mit einem sich von der ersten Plattenseite zur zweiten Plattenseite erstreckenden einlassseitigen Medienport für einen der beiden Reaktanten verbunden ist. Der aktive Bereich ist jeweils auslassseitig über einen außerhalb des aktiven Bereichs verlaufenden Sammelbereich strömungsmechanisch mit einem sich von der ersten Plattenseite zur zweiten Plattenseite erstreckenden auslassseitigen Medienport verbunden. Die Erfindung betrifft darüber hinaus einen Brennstoffzellenstapel mit einer derartigen Bipolarplatte.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff H₂ oder ein wasserstoffhaltiges Gasgemisch der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser.

Den Elektroden der Brennstoffzellen werden mittels Bipolarplatten die Reaktantengase zugeführt. Zusätzlich zu den Reaktantengasen wird aufgrund der bei der Brennstoffzellenreaktion erzeugten Wärme auch ein Kühlmedium durch die Bipolarplatten durchgeführt, so dass auf kleinstem Raum drei verschiedene Medien durch die Bipolarplatten geführt werden.

Bei der Versorgung der Brennstoffzellen mit den Reaktanten werden diese über Hauptkanäle (Ports) in die Bipolarplatten geleitet, die eine Verteilung der Reaktanten in einen aktiven Bereich bewirken soll, um mittels eines Flussfeldes die gesamte Fläche der Elektroden möglichst gleichmäßig zu versorgen. Da in dem Brennstoffzellenstapel mehrere Bipolarplatten mit den Membran-Elektroden-Einheiten gestapelt sind, werden Dichtungen eingesetzt, die die Hauptkanäle längs durch den Brennstoffzellenstapel abdichten. Zusätzlich muss eine gute Abdichtung gegenüber dem in Kühlmittelkanälen strömenden Kühlmedium erfolgen.

Einlassseitig des aktiven Bereichs, insbesondere auf der Kathodenseite der Brennstoffzelle, liegt ein relativ trockener Reaktantenstrom vor, der zu einem Austrocknen der einlassseitigen Bereiche der benachbart zur Bipolarplatte angeordneten Membran der Brennstoffzelle führen kann. Zur Kompensation des Effekts von trockener Luft am Einlass werden daher Befeuchter im System eingesetzt, die die Feuchte der Luft am Kathodeneingang erhöhen. Diese Befeuchter benötigen ein signifikantes Volumen, können die Leistungsdichte des Brennstoffzellensystems reduzieren und erhöhen die Gesamtkosten. Je weiter dieser Reaktantenstrom die Strömungskanäle des kathodenseitigen Reaktantenflussfelds durchläuft, desto stärker wird dieser befeuchtet, da die Brennstoffzellenreaktion zur Erzeugung von Produktwasser führt.

Um eine Vergleichmäßigung der Strömung des Reaktanten auf der Kathodenseite zu bewirken, schlägt die DE 10 2018 202 561 A1 eine Bipolarplatte für eine Brennstoffzelle vor, bei dem der Aktivbereich des Strömungsfelds eine Teilung von seinen Strömungskanälen in jeweils zwei kleinere Teilkanäle vorsieht. Eine ähnliche Konfiguration ist der Bipolarplatte der US 2007 / 0 178 359 A1 zu entnehmen, wobei aber im aktiven Bereich zwei voneinander getrennte Sektionen mit einer unterschiedlichen Kanalanzahl vorliegen, um auch hier eine Vergleichmäßigung der Reaktantenströmung zu bewirken. In der DE 10 2008 033 211 A1 ist eine Bipolarplatte gezeigt, bei der die Strömungskanäle eine fächerartige Aufweitung vorsehen, bei denen sich der nutzbare Strömungsquerschnitt der Kanäle zur gleichmäßigeren Verteilung des Reaktanten kontinuierlich vom Einlass zum Auslass erhöht.

Obwohl bereits Lösungen bekannt sind, die zu einer Vergleichmäßigung der Strömung der jeweiligen Reaktanten beitragen, wird dabei insbesondere auf der Kathodenseite einlassseitig noch ein sehr großer Bereich von dem frischen Kathodengas angeströmt, sodass eine starke und aktive Befeuchtung des Kathodengases erforderlich ist, bevor dieses dem Brennstoffzellenstapel zugeleitet wird.

Es ist daher die Aufgabe der vorliegenden Erfindung, eine Bipolarplatte und einen Brennstoffzellenstapel bereitzustellen, die für einen effizienten Betrieb der Brennstoffzellen einen geringeren Bedarf einer Vorbefeuchtung der Reaktanten aufweisen.

Diese Aufgabe wird gelöst durch eine Bipolarplatte mit den Merkmalen des Anspruchs 1 und durch einen Brennstoffzellenstapel mit den Merkmalen des Anspruchs 10. Vorteilhafte Ausgestaltungen mit zweckmäßigen Weiterbildungen der Erfindung sind in den abhängigen Ansprüchen angegeben.

Die erfindungsgemäße Bipolarplatte zeichnet sich insbesondere dadurch aus, dass zumindest eines der Flussfelder in seinem aktiven Bereich einlassseitig mit Stegen gebildet ist, welche eine Anlagefläche für eine benachbarte Lage der Brennstoffzelle aufweisen, die größer ist als eine Anlagefläche der auslassseitigen Stege, welche sich aus einer im aktiven Bereich vorhandenen Kanalaufteilung von wenigstens einigen der Strömungskanäle ergibt.

Da die Anlagefläche der die Strömungskanäle begrenzenden Stege stromauf der Kanalaufteilung einen größeren Flächeninhalt einnimmt, ergibt sich in diesem Bereich eine Art "Feuchtigkeitsspeicher" aufgrund der dort vorliegenden großen Breite der Stege. Mit anderen Worten wird also dort nicht so viel trockener Reaktant an die benachbarten Lagen, beispielsweise die Gasdiffusionslage oder die Membranelektrodenanordnung, gegeben, die zu einem Austrocknen an diesen Stellen führen könnte. Dadurch kann eine Reduktion des Befeuchtervolumens bis hin zu einem Wegfall erreicht werden. Außerdem liegt mit der gewählten Gestaltung des Reaktantenflussfelds eine reduzierte Anzahl an Strömungskanälen einlassseitig des aktiven Bereichs vor, sodass sich der noch stromauf des aktiven Bereichs liegende Verteilbereich auch deutlich einfacher, d.h. mit einer geringeren Komplexität umsetzen lässt.

Es versteht sich von selbst, dass der Begriff "aktiver Bereich" dahingehend zu verstehen ist, dass die Bipolarplatte selbst nicht chemisch aktiv ist, dass aber dort benachbart zum Reaktantenflussfeld die elektrochemische Brennstoffzellenreaktion erfolgt.

Um eine zuverlässige Kanalaufteilung zu realisieren, hat es sich als vorteilhaft erwiesen, wenn die stromab der Kanalaufteilung gelegenen Strömungskanäle von einem Zwischensteg getrennt verlaufen. Dieser Zwischensteg kann ebenfalls eine sehr reduzierte Fläche seines Stegrückens besitzen, sodass die stromab der Kanalaufteilung vorherrschende Anlagefläche entsprechend geringer ausgestaltet ist und damit ein zuverlässiges Austragen des bei der Brennstoffzellenreaktion entstehenden Produktwassers gewährleistet.

Eine auslassseitig verringerte Anlagefläche kommt auch dadurch zustande, dass der nutzbare Strömungsquerschnitt eines der stromauf der Kanalaufteilung liegenden Strömungskanals identisch ist zu dem nutzbaren Strömungsquerschnitt der stromab der Kanalaufteilung liegenden Strömungskanäle.

Vorzugsweise weist jeder der einlassseitigen Strömungskanäle eine Kanalaufteilung auf, sodass nach der Kanalaufteilung eine Verdopplung der Strömungskanäle gegenüber der Anzahl der Kanäle stromauf der Kanalaufteilung vorherrscht.

In Abhängigkeit der vorherrschenden Betriebsbedingungen innerhalb der Brennstoffzelle kann es von Vorteil sein, wenn nur jeder zweite oder auch nur jeder dritte Strömungskanal der Anzahl an einlassseitigen Strömungskanälen eine Kanalaufteilung aufweist.

Es ist die Möglichkeit gegeben, dass die Kanalaufteilung nicht nur zu einer Verdoppelung der Strömungskanäle führt, sondern auch zu einer Verdreifachung oder Vervierfachung. In diesem Zusammenhang ist daher die vorteilhafte Ausgestaltung möglich, wonach durch die Kanalaufteilung eine Aufteilung des stromauf der Kanalaufteilung gelegenen Teils des Strömungskanals in wenigstens drei stromab der Kanalaufteilung gelegene Strömungskanäle vorliegt.

Für eine Vergleichmäßigung des Wasseraustrags hat es sich auch als vorteilhaft erwiesen, wenn sich der nutzbare Strömungsquerschnitt des einlassseitigen Strömungskanals kontinuierlich bis hin zur Kanalaufteilung erhöht.

Auf diese Weise erhöht sich also auch im Verlauf der Strömung die angeströmte Fläche der benachbarten Lage, sodass der Befeuchtungsgrad mit der Zunahme bzw. der Abnahme dieser Fläche positiv korreliert.

Durch die Ausgestaltung mit einer verringerten einlassseitigen Anzahl an Strömungskanälen gegenüber der auslassseitigen Anzahl an Strömungskanälen ist zusätzlich die vorteilhafte Möglichkeit geschaffen, dass im Verteilbereich eine der Anzahl an einlassseitigen Strömungskanälen entsprechende Anzahl an Zufuhrkanälen vorliegt. Durch die verringerte Anzahl der einlassseitigen Strömungskanäle lässt sich also der Verteilbereich deutlich einfacher und damit mit einem geringeren Bauraumbedarf umsetzen.

Die in Verbindung mit der erfindungsgemäßen Bipolarplatte beschriebenen Vorteile, vorteilhaften Ausgestaltungen und Wirkungen gelten in gleichem Maße für den erfindungsgemäßen Brennstoffzellenstapel, bei dem ebenfalls ein geringerer Bedarf der Vorbefeuchtung vorliegt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Perspektivansicht auf einen Brennstoffzellenstapel,
- Fig. 2: eine Detaildraufsicht auf eine Bipolarplatte für den Brennstoffzellenstapel nach Figur 1,
- Fig. 3: eine Detaildraufsicht auf eine weitere Bipolarplatte für den Brennstoffzellenstapel nach Figur 1,
- Fig. 4: eine Detaildraufsicht auf eine nochmals weitere Bipolarplatte für den Brennstoffzellenstapel nach Figur 1,
- Fig. 5: eine Detaildraufsicht auf eine nochmals weitere Bipolarplatte für den Brennstoffzellenstapel nach Figur 1,
- Fig. 6: eine Detaildraufsicht auf eine nochmals weitere Bipolarplatte für den Brennstoffzellenstapel nach Figur 1, und
- Fig. 7: eine geschnittene Detailansicht auf eine nochmals weitere Bipolarplatte für den Brennstoffzellenstapel nach Figur 1.

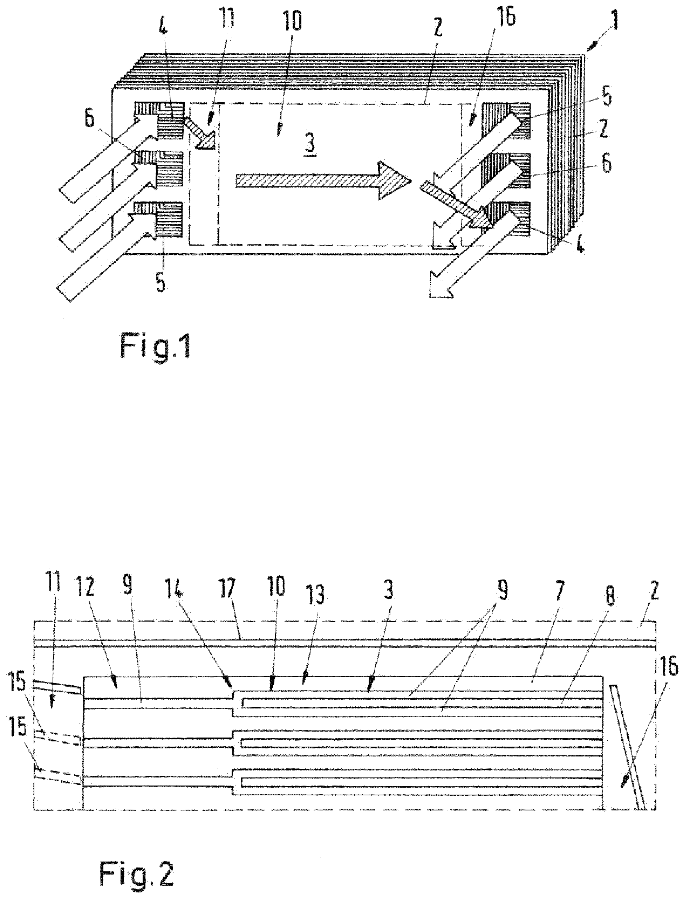

In den Figuren 2 bis 7 sind Bipolarplatten 1 gezeigt, die Einsatz in einem in Figur 1 dargestellten Brennstoffzellenstapel 1 finden, welcher aus einer Mehrzahl von in Reihe geschalteten Brennstoffzellen besteht. Jede der Brennstoffzellen umfasst eine Anode und eine Kathode sowie eine die Anode von der Kathode trennende protonenleitfähige Membran. Die beiden Elektroden zusammen mit der Membran bilden eine Membran-Elektroden-Anordnung (kurz: MEA). Die Membran ist aus einem lonomer, vorzugsweise einem sulfonierten Tetrafluorethylen-Polymer (PTFE) oder einem Polymer der perfluorierten Sulfonsäure (PFSA) gebildet. Alternativ kann die Membran als eine sulfonierte Hydrocarbon-Membran gebildet sein.

Über Anodenräume innerhalb des Brennstoffzellenstapels wird den Anoden Brennstoff (zum Beispiel Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (zum Beispiel H⁺) hindurch, ist aber undurchlässig für die Elektronen (e⁻). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet. Über Kathodenräume innerhalb des Brennstoffzellenstapels kann den Kathoden Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Dem Brennstoffzellenstapel 1 wird über eine Kathodenfrischgasleitung durch einen Verdichter komprimierte Luft zugeführt wird. Zusätzlich ist der Brennstoffzellenstapel 1 mit einer Kathodenabgasleitung verbunden. Anodenseitig wird dem Brennstoffzellenstapel 1 in einem Wasserstofftank bereitgehaltener Wasserstoff über eine Anodenfrischgasleitung zugeführt zur Bereitstellung der für die elektrochemische Reaktion in einer Brennstoffzelle erforderlichen Reaktanten. Diese Gase werden an die Bipolarplatten 2 übergeben, die für die Verteilung der Gase an die Membran oder eine benachbarte Gasdiffusionslage sowie der Ausleitung Medienports 4, 5 aufweisen. Die Strömung eines der beiden Reaktanten, insbesondere des Kathodengases, ist durch die über die Bipolarplatte 2 verlaufenden, gestreiften Pfeile illustriert. Typischerweise wird durch die Bipolarplatten 2 außerdem ein Kühlmedium geleitet, um die bei der Brennstoffzellenreaktion entstandene Wärme abzuführen; letzteres wird ebenfalls über Medienports 6 ein- bzw. ausgeleitet.

Allen gezeigten Bipolarplatten 2 haben gemeinsam, dass sie an ihrer ersten Plattenseite mit einem ersten Reaktantenflussfeld 3 gebildet sind, und dass sie an ihrer der ersten Plattenseite gegenüberliegenden zweiten Plattenseite mit einem zweiten Reaktantenflussfeld 3 gebildet sind. Die Flussfelder 3 umfassen in einem aktiven Bereich 10 jeweils mehrere von Stegen 7 begrenzte Strömungskanäle 9 für einen der beiden an der Brennstoffzellenreaktion teilnehmenden Reaktanten. Die einlassseitigen Medienports 4, 5 sind strömungsmechanisch einlassseitig mit dem aktiven Bereich 10 verbunden, wozu ein außerhalb des aktiven Bereichs 10 verlaufender Verteilbereich 11 mit Zufuhrkanälen 15 genutzt wird. Der aktive Bereich 10 ist auslassseitig über einen außerhalb des aktiven Bereichs 10 verlaufenden Sammelbereich 16 strömungsmechanisch mit den sich von der ersten Plattenseite zur zweiten Plattenseite erstreckenden auslassseitigen Medienports 4, 5 verbunden.

Um den Bedarf der Vorbefeuchtung der Reaktanten vor der Einleitung derselben in den aktiven Bereich 10 herabzusetzen, sehen die Bipolarplatten 2 vor, dass zumindest eines ihrer Flussfelder 3 in seinem aktiven Bereich 10 einlassseitig mit Stegen 7 gebildet ist, welche eine Anlagefläche 12 für eine benachbarte Lage der Brennstoffzelle aufweisen, die größer ist als eine Anlagefläche 13 der auslassseitigen Stege 7, welche sich aus einer im aktiven Bereich 10 vorhandenen Kanalaufteilung 14 von wenigstens einigen der Strömungskanäle 9 ergibt.

Auf diese Weise ist also einlassseitig des aktiven Bereichs 10 ein größerer Bereich der benachbarten Lage der Bipolarplatte 2 von der Anlagefläche 12 der Stege 7 verdeckt, sodass dieser Bereich als zusätzlicher "Feuchtespeicher" fungiert, da dort kein frischer Reaktant über die Plattenseite an die benachbarte Lage abgegeben wird. Dies hat insbesondere auf der Kathodenseite Vorteile, da die Brennstoffzellenreaktion als Produkt H₂O aufweist, das mit zunehmendem Strömungsverlauf des Reaktanten über das Reaktantenflussfeld 3 zu einer Sättigung der Kathodenzuluft führt.

Durch die geringere einlassseitige Anzahl an Strömungskanälen 9 gegenüber der auslassseitigen Anzahl an Strömungskanälen 9 im aktiven Bereich 10 lässt sich auch der zwischen den einlassseitigen Medienports 4, 5 und dem aktiven Bereich 10 liegende Verteilbereich 11 deutlich einfacher und mit einem geringeren Bauraumbedarf umsetzen, insbesondere dann, wenn im Verteilbereich 11 eine der Anzahl an einlassseitigen Strömungskanälen 9 entsprechende Anzahl an Zufuhrkanälen 15 vorliegt. Die Zufuhrkanäle 15 sind vorliegend strichliert dargestellt, da sie sich auch innerhalb des Plattenkörpers der Bipolarplatte 2 erstrecken können, bevor sie dann im aktiven Bereich 10 an die Plattenoberfläche treten.

In den Figuren ist zu erkennen, dass die stromab der Kanalaufteilung 14 gelegenen Strömungskanäle 9 von einem Zwischensteg 8 getrennt verlaufen. Zur Verringerung der auslassseitigen Anlagefläche 13 der Stege 7 trägt zudem bei, dass der nutzbare Strömungsquerschnitt eines der stromauf der Kanalaufteilung 14 liegenden Strömungskanals 9 identisch ist zu dem nutzbaren Strömungsquerschnitt der stromab der Kanalaufteilung 14 liegenden Strömungskanäle 9.

In Figur 2 ist die Möglichkeit gezeigt, dass jeder der einlassseitigen Strömungskanäle 9 eine Kanalaufteilung 14 aufweist.

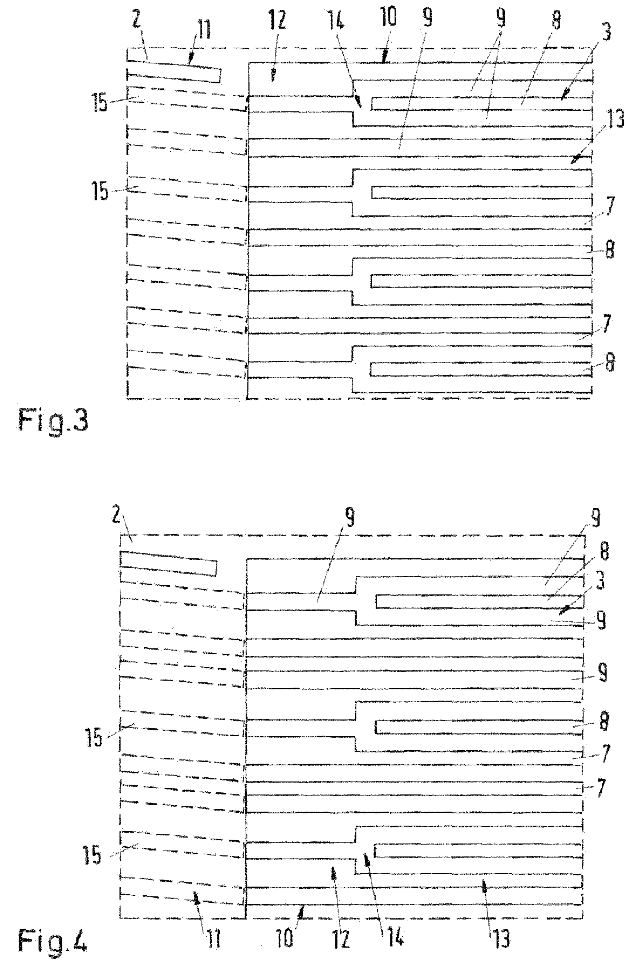

Die Figur 3 verweist auf die Möglichkeit, dass jeder zweite Strömungskanal 9 der Anzahl an einlassseitigen Strömungskanälen 9 eine Kanalaufteilung 14 aufweist.

Die Figur 4 verweist auf die Möglichkeit, dass jeder dritte Strömungskanal 9 der Anzahl an einlassseitigen Strömungskanälen 9 eine Kanalaufteilung 14 aufweist.

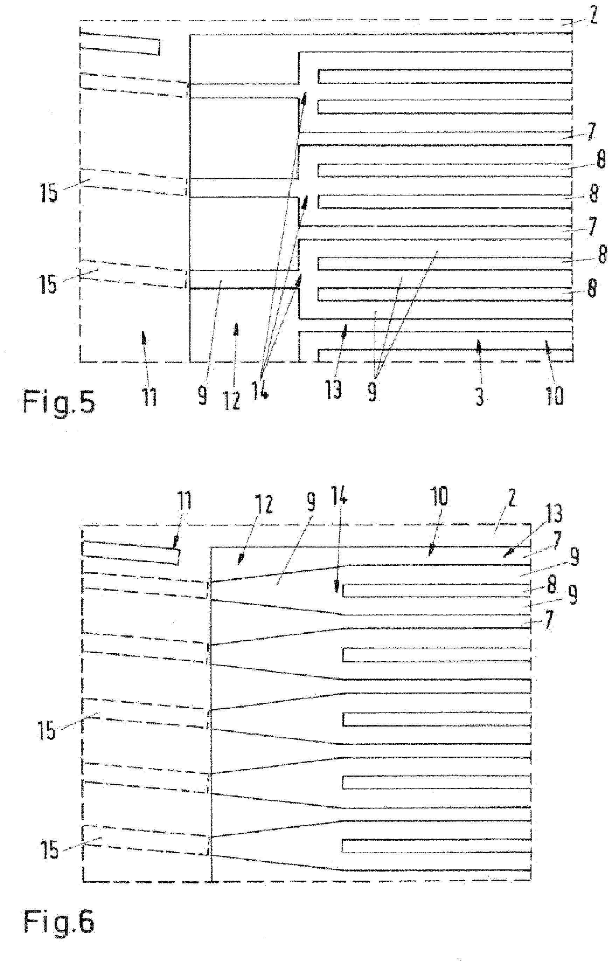

Die Figur 5 verweist auf die Möglichkeit, dass durch die Kanalaufteilung 14 eine Aufteilung des stromauf der Kanalaufteilung 14 gelegenen Teils des Strömungskanals 9 in wenigstens drei stromab der Kanalaufteilung 14 gelegenen Strömungskanäle 9 vorliegt. Vorliegend sind genau drei stromab der Kanalaufteilung 14 gelegene Strömungskanäle 9 vorhanden. Diese stromab der Kanalaufteilung 14 gelegenen Strömungskanäle 9 sind ihrerseits jeweils von einem Zwischensteg 8 getrennt.

Die Figur 6 verweist auf die Möglichkeit, dass sich der nutzbare Strömungsquerschnitt des einlassseitigen Strömungskanals 9 kontinuierlich bis hin zur Kanalaufteilung 14 erhöht. Umgekehrt reduziert sich auch im Verlauf der Strömung des Reaktanten die Anlagefläche 12 bis hin zu dem verringerten Flächeninhalt der Anlagefläche 13 stromab der Kanalaufteilung 14.

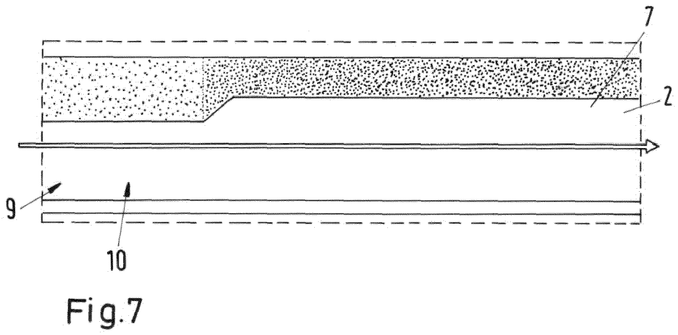

Die Schnittansicht nach Figur 7 der Bipolarplatte 2 verweist zudem auf die Möglichkeit, dass der Strömungskanal 9 einlassseitig mit einer Kanaltiefe gebildet ist, die geringer ist als die auslassseitige Kanaltiefe des Strömungskanals 9, da sich auf diese Weise eine unterschiedliche Höhe der Stege 7 ergibt, die zu einer unterschiedlichen Presskraft auf die benachbarte Lage, vorliegend einer Gasdiffusionslage, führt. Auf diese Weise wird also durch einen höheren Steg 7 und dem damit einhergehenden tieferen Strömungskanal 9 eine stärkere Presskraft auf die benachbarte Gasdiffusionslage ausgeübt, sodass deren Porosität dort niedriger ist als in dem durch die geringere Kanaltiefe realisierte Presskraft, welche deshalb zu einer höheren Porosität der Gasdiffusionslage in diesem Bereich führt.

Im Ergebnis zeichnen sich die vorliegenden Bipolarplatten 2 und damit ein mit solchen versehener Brennstoffzellenstapel 1 dadurch aus, dass im aktiven Bereich 10 einlassseitig eine Art "Feuchtigkeitsspeicher" vorliegt, der zu einer geringeren Austrocknung der benachbart gelegenen Membran führt. Erst auslassseitig des aktiven Bereichs 10 würde dabei eine stärkere Trocknung erfolgen, was aber durch das dort entstandene Produktwasser kompensiert wird.

### BEZUGSZEICHENLISTE:

- 1: Brennstoffzellenstapel
- 2: Bipolarplatte
- 3: Reaktantenflussfeld
- 4: Medienport (z.B. Oxidationsmittel/Kathode) / Hauptkanal
- 5: Medienport (z.B. Brennstoff/Anode) / Hauptkanal
- 6: Medienport (z.B. Kühlmittel) / Hauptkanal
- 7: Steg
- 8: Zwischensteg
- 9: Strömungskanal
- 10: Aktiver Bereich
- 11: Verteilbereich
- 12: Anlagefläche (einlassseitig)
- 13: Anlagefläche (auslassseitig)
- 14: Kanalaufteilung
- 15: Zufuhrkanal (Verteilbereich)
- 16: Sammelbereich
- 17: Dichtspur

## Patentansprüche

1. Bipolarplatte (2) für eine Brennstoffzelle,
die an ihrer ersten Plattenseite mit einem ersten Reaktantenflussfeld (3) gebildet ist,
die an ihrer der ersten Plattenseite gegenüberliegenden zweiten Plattenseite mit einem zweiten Reaktantenflussfeld (3) gebildet ist,
wobei die Flussfelder (3) in einem aktiven Bereich (10) jeweils mehrere von Stegen (7) begrenzte Strömungskanäle (9) für einen der beiden an der Brennstoffzellenreaktion teilnehmenden Reaktanten umfassen,
wobei jeweils der aktive Bereich (10) einlassseitig über einen außerhalb des aktiven Bereichs (10) verlaufenden Verteilbereich (11) strömungsmechanisch mit einem sich von der ersten Plattenseite zur zweiten Plattenseite erstreckenden einlassseitigen Medienport (4, 5) für einen der beiden Reaktanten verbunden ist,
und wobei jeweils der aktive Bereich (10) auslassseitig über einen außerhalb des aktiven Bereichs (10) verlaufenden Sammelbereich (16) strömungsmechanisch mit einem sich von der ersten Plattenseite zur zweiten Plattenseite erstreckenden auslassseitigen Medienport (4, 5) verbunden ist,
**dadurch gekennzeichnet, dass**
zumindest eines der Flussfelder (3, 4) in seinem aktiven Bereich (10) einlassseitig mit Stegen (7) gebildet ist, welche eine Anlagefläche (12) für eine benachbarte Lage der Brennstoffzelle aufweisen, die größer ist als eine Anlagefläche (13) der auslassseitigen Stege (7), welche sich aus einer im aktiven Bereich (10) vorhandenen Kanalaufteilung (14) von wenigstens einigen der Strömungskanäle (9) ergibt.

2. Bipolarplatte (2) nach Anspruch 1, **dadurch gekennzeichnet, dass** die stromab der Kanalaufteilung (14) gelegenen Strömungskanäle (9) von einem Zwischensteg (8) getrennt verlaufen.

3. Bipolarplatte (2) nach Anspruch 1 oder 2, **dadurch gekennzeichnet, dass** der nutzbare Strömungsquerschnitt eines der stromauf der Kanalaufteilung (14) liegenden Strömungskanals (9) identisch ist zu dem nutzbaren Strömungsquerschnitt der stromab der Kanalaufteilung (14) liegenden Strömungskanäle (9).

4. Bipolarplatte (2) nach einem der Ansprüche 1 bis 3, **dadurch gekennzeichnet, dass** jeder der einlassseitigen Strömungskanäle (9) eine Kanalaufteilung (14) aufweist.

5. Bipolarplatte (2) nach einem der Ansprüche 1 bis 3, **dadurch gekennzeichnet, dass** jeder zweite oder jeder dritte Strömungskanal (9) der Anzahl an einlassseitigen Strömungskanälen (9) eine Kanalaufteilung (14) aufweist.

6. Bipolarplatte (2) nach einem der Ansprüche 1 bis 5, **dadurch gekennzeichnet, dass** durch die Kanalaufteilung (14) eine Aufteilung des stromauf der Kanalaufteilung (14) gelegenen Teils des Strömungskanals (9) in wenigstens drei stromab der Kanalaufteilung (14) gelegene Strömungskanäle (9) vorliegt.

7. Bipolarplatte (2) nach einem der Ansprüche 1 bis 6, **dadurch gekennzeichnet, dass** sich der nutzbare Strömungsquerschnitt des einlassseitigen Strömungskanals (9) kontinuierlich bis hin zur Kanalaufteilung (14) erhöht.

8. Bipolarplatte (2) nach einem der Ansprüche 1 bis 7, **dadurch gekennzeichnet, dass** der Strömungskanal (9) einlassseitig mit einer Kanaltiefe gebildet ist, die geringer ist als die auslassseitige Kanaltiefe des Strömungskanals (9).

9. Bipolarplatte (2) nach einem der Ansprüche 1 bis 8, **dadurch gekennzeichnet, dass** im Verteilbereich (11) eine der Anzahl an einlassseitigen Strömungskanälen (9) entsprechende Anzahl an Zufuhrkanälen (15) vorliegt.

10. Brennstoffzellenstapel (1) umfassend eine Mehrzahl an Brennstoffzellen mit Bipolarplatten (2) nach einem der Ansprüche 1 bis 9.

## Claims

1. A bipolar plate (2) for a fuel cell, which is formed on its first plate side with a first reactant flow field (3), which is formed on its second plate side opposite the first plate side with a second reactant flow field (3), wherein the flow fields (3) in an active area (10) each comprise a plurality of flow channel (9) delimited by bar (7) for one of the two reactants participating in the fuel cell reaction, wherein in each case the active area (10) is connected on the inlet side via a distribution area (11) extending outside the active area (10) in a flow-mechanical manner to a media port (4, 5) for one of the two reactants, and wherein in each case the active area (10) is connected on the outlet side via a collecting area (16) extending outside the active area (10) to a media port (4, 5) on the outlet side extending from the first plate side to the second plate side, **characterized in that** at least one of the flow fields (3, 4) is formed in its active region (10) on the inlet side with bars (7) which have a contact surface (12) for an adjacent layer of the fuel cell which is larger than a contact surface (13) of the bars (7) on the outlet side, which contact surface results from a duct division (14) of at least some of the flow channels (9) present in the active area (10).

2. The bipolar plate (2) according to claim 1, **characterized in that** the flow channels (9) located downstream of the duct division (14) are separated by an intermediate web (8).

3. The bipolar plate (2) according to claim 1 or 2, **characterized in that** the usable flow cross-section of one of the flow channels (9) located upstream of the duct division (14) is identical to the usable flow cross-section of the flow channels (9) located downstream of the duct division (14).

4. The bipolar plate (2) according to one of claims 1 to 3, **characterized in that** each of the inlet-side flow channel (9) has a duct division (14).

5. The bipolar plate (2) according to one of claims 1 to 3, **characterized in that** every second or every third flow channel (9) of the number of inlet-side flow channels (9)

6. The bipolar plate (2) according to one of claims 1 to 5, **characterized in that** the duct division (14) divides the part of the flow channel (9) located upstream of the duct division (14) into at least three flow channels (9) located downstream of the duct division (14).

7. The bipolar plate (2) according to one of claims 1 to 6, **characterized in that** the usable flow cross-section of the inlet-side flow channel (9) increases continuously up the duct division (14).

8. The bipolar plate (2) according to one of claims 1 to 7, **characterized in that** the flow channel (9) is formed on the inlet-side with a channel depth which is less than the channel depth of the flow channel (9) on the outlet side.

9. The bipolar plate (2) according to one of claims 1 to 8, **characterized in that** a number of supply ducts (15) corresponding to number on inlet-flow channels (9) is present in the distribution are (11).

10. A fuel cell stack (1) comprising a plurality of fuel cells with bipolar plates (2) according to any one of claims 1 to 9.

## Revendications

1. Plaque bipolaire (2) pour une pile à combustible,
qui est formée au niveau de son premier côté de plaque par un premier champ de flux de réactif (3),
qui est formée au niveau de son second côté de plaque opposé au premier côté de plaque par un second champ d'écoulement de réactif (3),
dans laquelle les champs de flux (3) comprennent dans une zone active (10) respectivement plusieurs canaux d'écoulement (9) délimités par des entretoises (7) pour un des deux réactifs participant à la réaction de la pile à combustible,
dans laquelle respectivement la zone active (10) est reliée côté entrée par le biais d'une zone de répartition (11) s'étendant en dehors de la zone active (10) de manière fluidique à un orifice de milieu (4, 5) côté entrée s'étendant du premier côté de plaque au second côté de plaque pour un des deux réactifs,
et dans laquelle respectivement la zone active (10) est reliée côté sortie par le biais d'une zone de collecte (16) s'étendant en dehors de la zone active (10) de manière fluidique à un orifice de milieu (4, 5) côté sortie s'étendant du premier côté de plaque au second côté de plaque,
**caractérisée en ce que**
au moins un des champs de flux (3, 4) est formé dans sa zone active (10) côté entrée par des entretoises (7) qui présentent une surface d'appui (12) pour une position contiguë de la pile à combustible qui est plus grande qu'une surface d'appui (13) des entretoises (7) côté sortie qui résulte d'une répartition de canal (14) présente dans la zone active (10) d'au moins certains des canaux d'écoulement (9).

2. Plaque bipolaire (2) selon la revendication 1, **caractérisée en ce que** les canaux d'écoulement (9) placés en aval de la répartition de canal (14) s'étendent séparément d'une entretoise intermédiaire (8).

3. Plaque bipolaire (2) selon la revendication 1 ou 2, **caractérisée en ce que** la section transversale d'écoulement utile d'un canal d'écoulement (9) se trouvant en amont de la répartition de canal (14) est identique à la section transversale d'écoulement utile des canaux d'écoulement (9) se trouvant en aval de la répartition de canal (14).

4. Plaque bipolaire (2) selon l'une quelconque des revendications 1 à 3, **caractérisée en ce que** chacun des canaux d'écoulement (9) côté entrée présente une répartition de canal (14).

5. Plaque bipolaire (2) selon l'une quelconque des revendications 1 à 3, **caractérisée en ce que** chaque deuxième ou chaque troisième canal d'écoulement (9) du nombre de canaux d'écoulement (9) côté entrée présente une répartition de canal (14).

6. Plaque bipolaire (2) selon l'une quelconque des revendications 1 à 5, **caractérisée en ce que**, par la répartition de canal (14), une répartition de la partie du canal d'écoulement (9) placée en amont de la répartition de canal (14) est présente dans au moins trois canaux d'écoulement (9) placés en aval de la répartition de canal (14).

7. Plaque bipolaire (2) selon l'une quelconque des revendications 1 à 6, **caractérisée en ce que** la section transversale d'écoulement utile du canal d'écoulement (9) côté entrée augmente en continu jusqu'à la répartition de canal (14).

8. Plaque bipolaire (2) selon l'une quelconque des revendications 1 à 7, **caractérisée en ce que** le canal d'écoulement (9) est formé côté entrée par une profondeur de canal qui est inférieure à la profondeur de canal côté sortie du canal d'écoulement (9).

9. Plaque bipolaire (2) selon l'une quelconque des revendications 1 à 8, **caractérisée en ce qu'**un nombre de canaux d'alimentation (15) correspondant au nombre de canaux d'écoulement (9) côté entrée est présent dans la zone de répartition (11).

10. Empilement de piles à combustible (1) comprenant une pluralité de piles à combustible avec des plaques bipolaires (2) selon l'une quelconque des revendications 1 à 9.
